# FASCICULE DE BREVET EUROPEEN

(11) **EP 2 041 942 B1**
(45) Date de publication et mention de la délivrance du brevet: **29.01.2014**
(21) Numéro de dépôt: 07787291.9
(22) Date de dépôt: 10.07.2007
(51) Int. Cl.: H04L 29/06, G06F 21/00

(54) **PARTAGE CONTRÔLÉ DE DONNÉES PERSONNELLES**
GESTEUERTE GEMEINSAME NUTZUNG PERSÖNLICHER DATEN
CONTROLLED SHARING OF PERSONAL DATA

(30) Priorité: 10.07.2006 FR 0652897
(43) Date de publication de la demande: 01.04.2009
(73) Titulaire: Gemalto SA, 92190 Meudon (FR)
(72) Inventeur: FAURE, Frédéric, F-13260 Cassis (FR); MALLET, Lionel, F-13007 Marseille (FR)
(74) Mandataire: Scheer, Luc
(86) Numéro de dépôt international: PCT/EP2007/057016
(87) Numéro de publication internationale: WO 2008/006821

(56) Documents cités:
- US-A1- 2004 193 685
- US-A1- 2005 010 780

## Description

La présente invention concerne un partage contrôlé de données personnelles.

Plus particulièrement, elle a trait à un partage de données personnelles contrôlé et géré par le propriétaire des données personnelles.

Actuellement, lorsqu'une personne A veut partager avec une personne B des données personnelles la concernant, telles que des numéros de téléphone, des adresses postales, des adresses électroniques, via des terminaux, la personne A perd tout contrôle sur l'utilisation que fera la personne B des données qu'elle lui a délivrées, et sur la durée d'utilisation de ces mêmes données. Il semble cependant évident que la personne A devrait être la seule à pouvoir décider de règles d'utilisation des données personnelles qu'elle a partagées avec d'autres personnes, voire d'interdire le partage à tout moment. Cependant, il serait souhaitable que la personne A qui autorise le partage des données puisse assurer que ces données restent à jour pour toutes les personnes avec qui elle les a partagées.

Les opérations de mise à jour de données personnelles dans des systèmes de télécommunications existants sont basées sur des solutions centralisées dans lesquelles un serveur enregistre des données personnelles de la personne A en association à des identificateurs d'autres personnes susceptibles d'utiliser ces données telles que la personne B. Le serveur interroge régulièrement le terminal de la personne A propriétaire des données personnelles enregistrées pour vérifier leur validité, pour éventuellement effectuer les mises à jour sur le serveur et pour commander ces mises à jour dans les terminaux des autres personnes dont les identificateurs sont enregistrés en association aux données de la personne A dans le serveur.

Une telle mise à jour de données personnelles ne peut être effectuée automatiquement sur des réseaux décentralisés de type ad-hoc par une communication directe entre les terminaux des personnes A et B, et est uniquement effectuée de manière informelle.

Le document US-2005/0010780 décrit un système d'accès à des informations personnelles dans lequel, après une demande d'information émanant d'un premier dispositif à un second dispositif, un certificat est transmis de ce second dispositif au premier dispositif. A l'aide de ce certificat, le premier dispositif peut interroger une base de données comprenant des informations personnelles du second dispositif. La base de données transmet alors les données personnelles demandées au premier dispositif. La solution décrite dans ce document, si elle permet de ne transmettre les informations personnelles du titulaire du second dispositif qu'au premier dispositif, et ce de manière sécurisée et avec l'accord du titulaire du second dispositif, ne permet pas au titulaire du second dispositif de mettre à jour ou de supprimer les informations personnelles dans le premier dispositif sans l'accord du titulaire de ce dernier.

D'autre part aucune solution actuelle ne permet de supprimer depuis le terminal de la personne A les données personnelles de celle-ci qui ont été partagées avec d'autres personnes, dans les terminaux de ces autres personnes.

L'invention a pour objectif un contrôle du partage de données personnelles directement géré dans un objet communicant de l'usager propriétaire desdites données personnelles.

Pour atteindre cet objectif, un procédé pour contrôler un partage de données personnelles d'un premier usager d'un premier objet communicant avec un deuxième usager d'un deuxième objet communicant, est caractérisé en ce qu'il comprend les étapes suivantes de :
partager dans le premier objet communicant en réponse à une requête du deuxième usager des données personnelles du premier usager enregistrées dans le premier objet communicant parmi d'autres données personnelles du premier usager,
associer dans le premier objet communicant les données personnelles partagées avec une référence du deuxième usager, et
transmettre les données personnelles partagées au deuxième objet communicant, et les enregistrer dans le deuxième objet communicant en association avec une référence du premier usager.

Selon une caractéristique de l'invention, le procédé comprend après l'étape de partager, une étape pour contrôler depuis le premier objet communicant les données personnelles partagées du premier usager en transmettant un ordre de contrôle contenant au moins la référence du premier usager au deuxième objet communicant afin de trouver dans le deuxième objet communicant les données personnelles du premier usager en association à la référence extraite de l'ordre de contrôle et les traiter en fonction de l'ordre de contrôle transmis.

L'invention télécontrôle avantageusement depuis un premier objet communicant tel un terminal mobile associé à une carte à puce ou tout autre type de terminal, les données personnelles partagées du premier usager enregistrées dans un objet communicant du deuxième usager. Le premier usager conserve le contrôle de ses propres données dans les objets communicants des autres usagers.

Selon une caractéristique de l'invention, le contrôle de données personnelles peut comprendre :
dans le premier objet communicant, une mise à jour d'au moins une donnée personnelle du premier usager en une donnée personnelle modifiée, une recherche de la référence du deuxième usager associée à la donnée personnelle et une transmission de l'ordre de contrôle contenant la donnée personnelle modifiée et la référence du premier usager au deuxième objet communicant, et
une mise à jour de la donnée personnelle associée à la référence du premier usager extraite de l'ordre de contrôle dans le deuxième objet communicant en fonction de la donnée personnelle modifiée extraite de l'ordre de contrôle.

Le contrôle de données personnelles peut également comprendre une transmission de l'ordre de contrôle contenant la référence du premier usager depuis le premier objet communicant au deuxième objet communicant, une suppression d'au moins une donnée personnelle associée à la référence du premier usager extraite de l'ordre de contrôle dans le deuxième objet communicant, et une suppression d'une association entre ladite donnée personnelle et la référence du deuxième usager dans le premier objet communicant.

Selon une autre caractéristique de l'invention, le procédé comprend initialement un enregistrement de données personnelles du premier usager dans le premier objet communicant, une transmission d'une adresse d'accès du premier objet communicant depuis ledit premier objet communicant à un moyen serveur, une génération de la référence du premier usager par le moyen serveur, et un appariement de la référence à l'adresse d'accès transmise dans le moyen serveur.

Selon un autre aspect de l'invention, des règles d'utilisation établies par le premier usager sont transmises avec les données personnelles partagées depuis le premier objet communicant au deuxième objet communicant.

L'invention concerne aussi un objet communicant d'un premier usager communiquant avec un deuxième objet communicant d'un deuxième usager pour contrôler un partage de données personnelles du premier usager avec le deuxième usager. Ledit objet communicant est caractérisé en ce qu'il comprend :
un moyen pour partager en réponse à une requête du deuxième usager des données personnelles du premier usager enregistrées dans le premier objet communicant parmi d'autres données personnelles de l'usager,
un moyen pour associer les données personnelles partagées avec une référence (RUB) du deuxième usager,
un moyen pour transmettre les données personnelles partagées au deuxième objet communicant afin d'enregistrer les données personnelles transmises dans le deuxième objet communicant en association avec une référence (RUA) du premier usager, et
un moyen pour contrôler les données personnelles partagées du premier usager en transmettant un ordre de contrôle contenant au moins la référence du premier usager au deuxième objet communicant afin de trouver dans le deuxième objet communicant les données personnelles du premier usager en association à la référence extraite de l'ordre de contrôle et les traiter en fonction de l'ordre de contrôle transmis.

L'invention se rapporte à un programme d'ordinateur apte à être mis en oeuvre dans ledit objet communicant communiquant avec un deuxième objet communicant d'un deuxième usager pour contrôler un partage de données personnelles du premier usager avec le deuxième usager. Le programme comprend des instructions qui, lorsque le programme est exécuté dans ledit premier objet communicant, réalisent les étapes suivantes :
partager en réponse à une requête du deuxième usager des données personnelles du premier usager enregistrées dans le premier objet communicant parmi d'autres données personnelles du premier usager,
associer les données personnelles partagées avec une référence du deuxième usager,
transmettre les données personnelles partagées au deuxième objet communicant afin d'enregistrer les données personnelles transmises dans le deuxième objet communicant en association avec une référence du premier usager, et
contrôler les données personnelles partagées du premier usager en transmettant un ordre de contrôle contenant au moins la référence du premier usager au deuxième objet communicant afin de trouver dans le deuxième objet communicant les données personnelles du premier usager en association à la référence extraite de l'ordre de contrôle et les traiter en fonction de l'ordre de contrôle transmis.

L'invention concerne également un objet communicant communiquant avec un premier objet communicant d'un premier usager contrôlant un partage de données personnelles avec un deuxième usager utilisant ledit objet communicant. Ledit objet communicant est caractérisé en ce qu'il comprend :
un moyen pour requérir des données personnelles du premier usager enregistrées dans le premier objet communicant parmi d'autres données personnelles du premier usager, les données personnelles partagées enregistrées dans le premier objet communicant étant associées à une référence du deuxième usager,
un moyen pour enregistrer les données personnelles partagées transmises en association avec une référence du premier usager, et
un moyen pour traiter les données personnelles partagées associées à la référence du premier usager extraite d'un ordre de contrôle transmis depuis le premier objet communicant, en fonction de l'ordre de contrôle.

Enfin, l'invention se rapporte à un programme d'ordinateur apte à être mis en oeuvre dans ledit objet communicant communiquant avec un premier objet communicant d'un premier usager contrôlant un partage de données personnelles avec un deuxième usager utilisant ledit objet communicant ledit. Le programme comprend des instructions qui, lorsque le programme est exécuté dans ledit objet communicant, réalisent les étapes suivantes :
requérir des données personnelles du premier usager enregistrées dans le premier objet communicant parmi d'autres données personnelles du premier usager, les données personnelles partagées enregistrées dans le premier objet communicant étant associées à une référence du deuxième usager,
enregistrer les données personnelles partagées transmises en association avec une référence du premier usager, et
traiter les données personnelles partagées associées à la référence du premier usager extraite d'un ordre de contrôle transmis depuis le premier objet communicant, en fonction de l'ordre de contrôle transmis.

Un objet communicant peut à la fois comprendre un moyen pour partager, un moyen pour associer, un moyen pour transmettre et un moyen pour contrôler tels qu'inclus dans le premier objet communicant ci-dessus, et un moyen pour requérir, un moyen pour enregistrer et un moyen pour traiter tels qu'inclus dans le deuxième objet communicant ci-dessus.

D'autres caractéristiques et avantages de la présente invention apparaîtront plus clairement à la lecture de la description suivante de plusieurs réalisations de l'invention données à titre d'exemples non limitatifs, en référence aux dessins annexés correspondants dans lesquels :
- la figure 1 est un bloc-diagramme schématique d'un système de partage de données personnelles mettant en oeuvre un procédé pour contrôler un partage de données personnelles selon l'invention ;
- la figure 2 est un bloc-diagramme plus détaillé représentant un serveur de correspondance et un ordinateur personnel en tant qu'objet communicant dans le système de la figure 1 ;
- la figure 3 est une bloc-diagramme représentatif d'une carte à puce en tant qu'objet communicant associée à un terminal radio mobile ;
- la figure 4 est un algorithme représentatif d'une étape d'enregistrement de données personnelles du procédé pour contrôler un partage de données personnelles selon l'invention ;
- la figure 5 est un algorithme représentatif d'une étape de partage de données personnelles du procédé selon l'invention ;
- la figure 6 est un algorithme représentatif d'une étape de mise à jour de données personnelles du procédé selon l'invention ; et
- la figure 7 est un algorithme représentatif d'une étape de suppression de données personnelles du procédé selon l'invention.

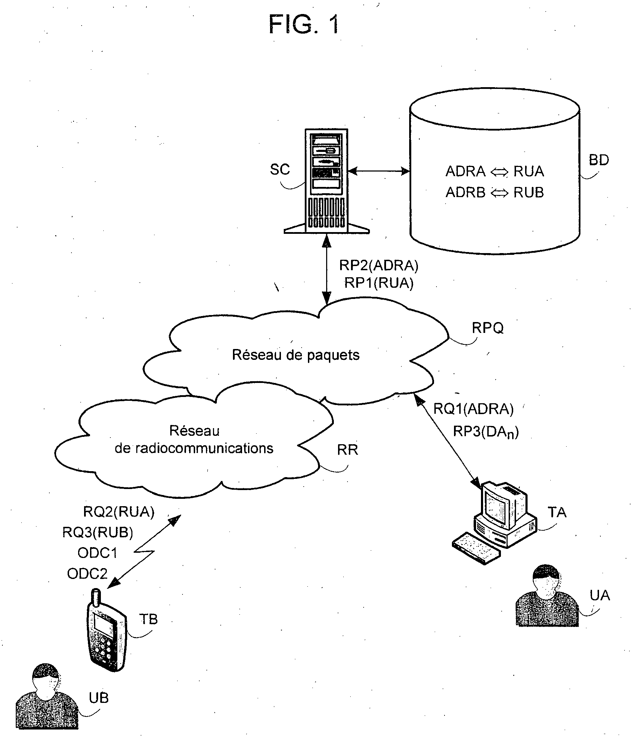

Dans un système de partage de données personnelles illustré à la figure 1, des usagers possèdent chacun un objet communicant tel qu'un ordinateur personnel TA, un terminal radio mobile TB ou tout autre dispositif personnel de communication communiquant avec un serveur de correspondance SC à travers un réseau de télécommunications RR-RPQ.

Le réseau de télécommunications comprend un réseau cellulaire de radiocommunications RR du type GSM avec gestion de la mobilité et accès par voie radio GPRS, ou du type à accès multiple à répartition par codes CDMA (Coded Division Multiple Access) de la troisième génération (3GPP) du type UMTS (Universal Mobile Telecommunications System) ou UTRAN (UMTS Terrestrial Radio Access Network), ou de la troisième génération (3GPP2) du type CDMA 2000, adossé à un réseau à commutation par paquets RPQ de type internet. Le réseau de télécommunications peut également être un réseau local du type WiFi (Wireless Fidelity), WiMax (Worlwide Interoperability for Microwave Access) ou Wibro (Wireless Broadband), ou encore un réseau de proximité du type infrarouge, Bluetooth ou NFC (Near Field Communication).

Le serveur de correspondance SC est relié à une base de données BD qui contient des adresses d'accès ADRA, ADRB d'agents de répertoire d'objets communicants TA, TB du réseau de télécommunications respectivement en correspondance à des références RUA, RUB des usagers UA, UB de ces objets communicants. Un agent de répertoire dans un objet communicant gère les données personnelles de l'usager dudit objet et les données personnelles d'usagers d'autres objets communicants. Une adresse d'accès ADRA, ADRB d'un agent de répertoire d'un objet communicant est un numéro de téléphone ou une adresse réseau de type IP (Internet Protocol). Une référence RUA, RUB d'un usager d'un objet communicant est de préférence anonyme et caractérise l'usager et/ou son objet communicant sans pour autant qu'un autre usager puisse identifier directement ledit usager et puisse communiquer directement avec lui.

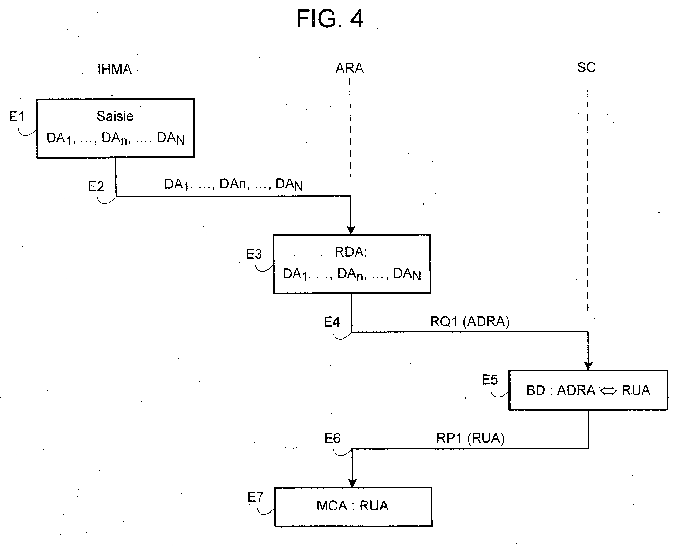

Le système de partage de données personnelles illustré à la figure 1 met en oeuvre un procédé pour contrôler un partage de données personnelles comportant des étapes principales respectivement représentées aux figures 4 à 7, et qui sont un enregistrement de données personnelles d'un premier usager UA d'un objet communicant TA du réseau, un partage de données personnelles du premier usager UA avec un deuxième usager UB, une mise à jour de données personnelles du premier usager UA et une suppression des données personnelles du premier usager UA dans l'objet communicant TB du deuxième usager UB.

Lors de l'exécution de l'une de ces étapes, des requêtes RQ1 et réponses RP1 transitent entre l'objet communicant TA en tant qu'ordinateur personnel et le serveur de correspondance SC via le réseau de paquets RPQ.

De même des requêtes RQ2, RQ3, réponses RP2, RP3 et ordres de contrôle ODC1, ODC2 entre l'objet communicant TB en tant que terminal radio mobile et le serveur SC ou l'ordinateur personnel TA sont échangés à travers le réseau de radiocommunications RR et le réseau de paquets RPQ par l'intermédiaire par exemple d'une passerelle de communication non représentée sur la figure 1. La passerelle de communication peut comporter une passerelle d'accès pour communiquer avec le serveur SC à travers le réseau de paquets RPQ à haut débit. Une autre passerelle d'accès de la passerelle de communication communique avec au moins un commutateur du réseau de radiocommunications RR, à travers bien souvent un réseau d'accès tel qu'un réseau de paquets de type X.25 ou un réseau RNIS (Réseau Numérique à Intégration de Service) ou ATM (Asynchronous Transfer Mode).

La passerelle de communication échange avec le terminal radio mobile TB à travers le réseau RR des messages qui encapsulent des paquets IP (Internet Protocol) transmis vers et par le serveur de correspondance SC ou l'ordinateur TA à travers le réseau RPQ.

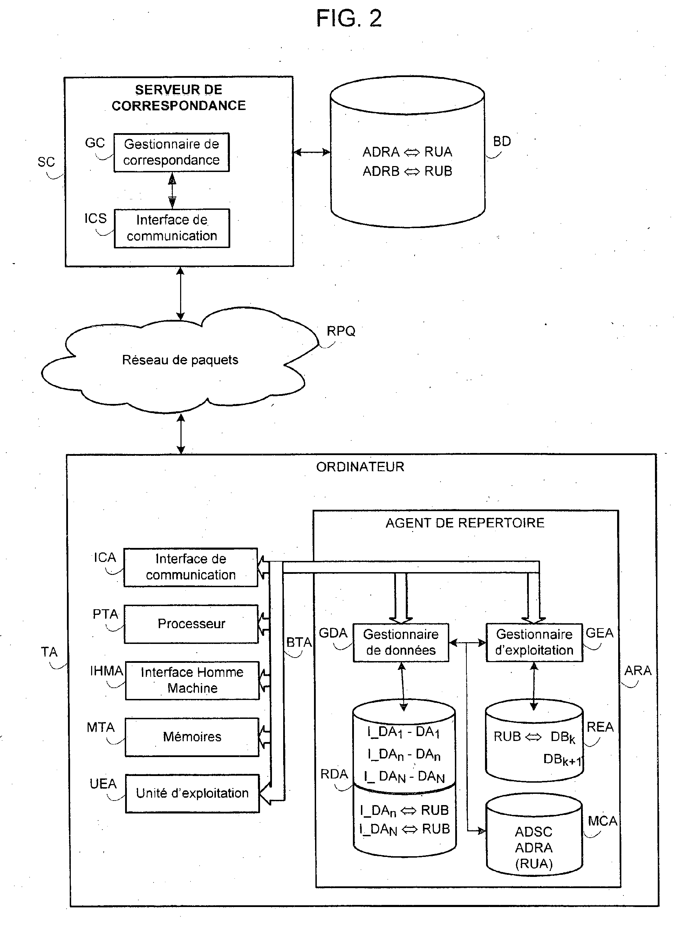

Dans la **figure 2**, on a représenté le serveur de correspondance SC et l'objet communicant TA sous forme de blocs fonctionnels dont la plupart assurent des fonctions ayant un lien avec l'invention et peuvent correspondre à des modules logiciels et/ou matériels.

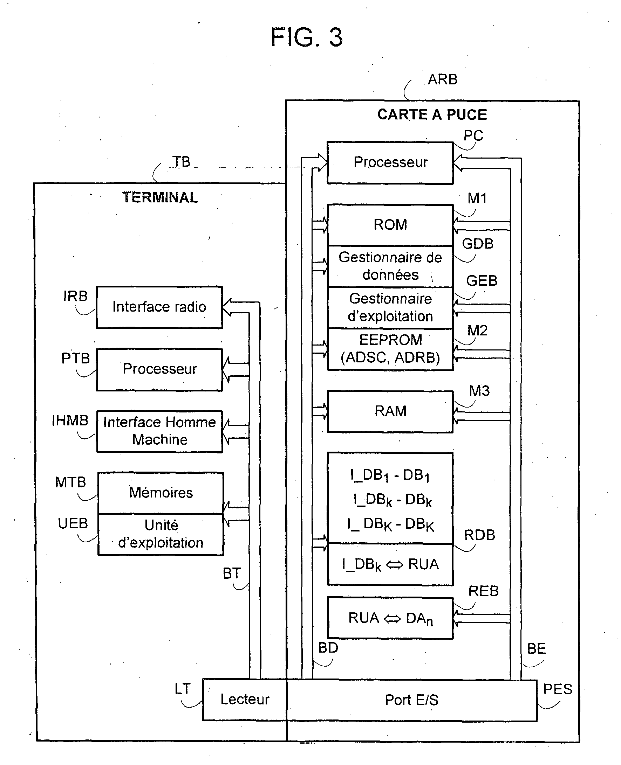

Afin de ne pas surcharger la figure 2, l'objet communicant TB est représenté à la figure 3 et comprend en partie des modules identiques à ceux de l'ordinateur TA décrits ci-après.

Le serveur de correspondance SC comprend un gestionnaire de correspondance GC qui gère diverses opérations dans la base de données BD, et une interface de communication ICS pour transmettre et recevoir des paquets IP à travers le réseau de paquets RPQ.

Les opérations gérées par le gestionnaire GC sont notamment l'enregistrement de correspondances respectivement entre des références anonymes d'usagers et les adresses d'accès des agents de répertoire de leurs objets communicants, et la recherche d'une adresse d'accès en fonction de la référence anonyme associée d'un usager transmise par l'objet communicant d'un autre usager.

En référence à la figure 2, l'objet communicant TA est un ordinateur personnel.

L'ordinateur personnel TA comprend une interface de communication ICA, un processeur PTA, une interface homme-machine IHMA, des mémoires MTA, une unité d'exploitation UEA et un agent de répertoire ARA. Les différents éléments du terminal sont reliés entre eux par un bus bidirectionnel BTA.

L'interface IHMA contrôle l'interaction entre l'ordinateur TA et l'usager UA, et comporte un clavier associé à un afficheur et/ou un écran tactile et le cas échéant un dispositif de reconnaissance vocale.

L'agent de répertoire ARA gère les données personnelles de l'usager UA, et exploite des données personnelles d'autres usagers d'objets communicants à condition d'y avoir été autorisé par ces autres usagers UA. L'agent de répertoire ARA communique avec les agents de répertoire des objets communicants de deuxièmes et troisièmes usagers afin soit de transmettre des ordres de contrôle pour contrôler dans les agents de répertoire des deuxièmes usagers les données personnelles partagées de l'usager UA, soit d'exécuter dans l'agent ARA des ordres de contrôle transmis par les agents de répertoire des troisièmes usagers concernant des données personnelles partagées des troisièmes usagers. Au moins un usager peut être à la fois un deuxième usager et un troisième usager.

L'agent de répertoire ARA comprend un gestionnaire de données GDA relié à un répertoire de données personnelles RDA, un gestionnaire d'exploitation GEA relié à un répertoire d'exploitation REA, et une mémoire commune MCA. La mémoire MCA est accessible par les deux gestionnaires GDA et GEA et mémorise l'adresse d'accès ADSC du serveur de correspondance SC et l'adresse d'accès ADRA de l'agent de répertoire ARA.

En variante les répertoires RDA et REA sont confondus en un unique répertoire.

Le gestionnaire de données GDA gère les données personnelles DA₁ à DA_{N} de l'usager UA enregistrées dans le répertoire de données RDA chacune en correspondance avec un identificateur de donnée I_DA₁, I_DA_{N}. Les données personnelles sont par exemple le nom de l'usager, son prénom, sa date de naissance, son adresse personnelle, son ou ses numéros de téléphone, sa profession et son adresse professionnelle. Les données personnelles d'un usager peuvent être également des données autres que des données identifiants l'usager et sont par exemple des photos ou des films personnels de l'usager. Le gestionnaire GDA gère également des profils personnels établis par l'usager UA. Chaque profil comporte une ou des données personnelles sélectionnées parmi les données personnelles DA₁ à DA_{N} et est également enregistré dans le répertoire RDA en association avec un identificateur de profil. Les profils personnels d'un usager sont par exemple, un profil professionnel, un profil commercial pour clientèle, un profil pour amis et un profil pour membre d'un club.

Le répertoire de données RDA enregistre également des associations reliant chaque identificateur de donnée personnelle ou de profil personnel de l'usager UA avec une ou des références anonymes d'usagers d'autres objets communicants du réseau qui sont autorisés par l'usager UA à exploiter la donnée ou le profil désigné par l'identificateur. Par exemple l'identificateur I_DAₙ de la donnée personnelle DAₙ, avec n un indice compris entre 1 et l'entier N, est associé à la référence anonyme RUB de l'usager UB du terminal radio mobile TB. De même, l'identificateur I_DA_{N} de la donnée personnelle DA_{N} est également associé à la référence anonyme RUB. Un même identificateur de donnée ou de profil peut être associé à plusieurs références anonymes d'usagers.

En variante, les données personnelles ou les profils personnels sont directement associés à une ou des références anonymes d'autres.usagers.

Cette association est établie lorsque l'usager UA autorise l'usager UB à exploiter les données DAₙ et DA_{N} qui sont également enregistrées dans le répertoire d'exploitation de l'agent de répertoire du terminal TB.

Le gestionnaire d'exploitation GEA de l'agent ARA gère des données personnelles d'autres usagers d'objets communicants, ces données personnelles étant enregistrées dans le répertoire d'exploitation REA en association aux références anonymes des usagers propriétaires de ces données. Par exemple, les données personnelles DBₖ et DBₖ₊₁, avec k un indice compris entre 1 et l'entier K, de l'usager UB du terminal radio mobile TB sont enregistrées dans le répertoire REA en association à la référence RUB de l'usager UB. L'usager UB autorise l'usager UA à exploiter ses données personnelles DBₖ et DBₖ₊₁. Optionnellement, les identificateurs I_DBₖ et I_DBₖ₊₁ des données DBₖ et DBₖ₊₁ sont également enregistrés dans le répertoire REA conjointement aux données DBₖ et DBₖ₊₁.

Chacune de ces données personnelles exploitables est de préférence accompagnée d'une ou de plusieurs règles d'utilisation définissant des conditions d'utilisation desdites données. Les données personnelles d'autres usagers enregistrées dans le répertoire REA sont de préférence et par défaut masquées et sont associées à des représentations graphiques tels des icones affichés au moyen de l'interface homme-machine IHMA ou à des identificateurs de ces représentations graphiques. Par exemple, le numéro de téléphone d'un autre usager est représenté au moyen de l'interface IHMA sous forme d'un icone représentatif d'un téléphone à sélectionner par l'usager UA pour demander l'établissement d'une communication avec l'autre usager. Une règle d'utilisation associée à ce numéro de téléphone concerne par exemple l'autorisation d'afficher ledit numéro de téléphone au moyen de l'interface IHMA. Selon un autre exemple, une donnée personnelle correspondant à un film personnel ou à des photos est associée à une règle d'utilisation de type gestion de droit numérique DRM ("Digital Right Management" en anglais).

Lors d'une mise à jour ou d'une suppression d'une donnée personnelle dé l'usager UA dans un répertoire d'exploitation d'un autre usager autorisé à exploiter ladite donnée personnelle, le gestionnaire de données GDA transmet un ordre de contrôle au gestionnaire d'exploitation de l'autre usager afin que ce dernier mette à jour ou supprime la donnée dans le répertoire d'exploitation associé.

De même, le gestionnaire d'exploitation GEA exécute des ordres de contrôle transmis par des gestionnaires de données dans des objets communicants d'autres usagers dont des données personnelles ou des profils personnels sont enregistrés dans le répertoire d'exploitation REA.

Les opérations gérées par les gestionnaires GDA et GEA sont décrites plus en détail en référence aux figures 4 à 7.

L'unité d'exploitation UEA exploite les données personnelles d'autres usagers enregistrées dans le répertoire REA de l'agent d'exploitation ARA sans les modifier et en respectant les règles d'utilisation associées à ces données. Par exemple une fois qu'un usager a sélectionné un icone représentatif d'un numéro de téléphone d'un autre usager, l'unité d'exploitation UEA reçoit depuis le gestionnaire d'exploitation GEA le numéro de téléphone afin d'établir une communication avec l'objet communicant associé à ce numéro, tout ceci sans que l'usager UA n'ait connaissance dudit numéro.

En variante, l'unité d'exploitation UEA est intégrée dans l'agent de répertoire ARA.

Selon une autre variante, l'unité d'exploitation UEA est directement reliée au répertoire d'exploitation REA.

Selon une variante d'implémentation de l'objet communicant, l'agent de répertoire comprend uniquement l'un des deux gestionnaires GDA et GEA et le répertoire associé à celui-ci pour soit enregistrer et contrôler des données personnelles de l'usager de l'objet communicant, soit enregistrer et exploiter les données personnelles d'autres usagers.

Selon une implémentation préférée de l'invention illustrée à la **figure 3****,** l'agent de répertoire ARB est une carte à puce associée par contact ou sans contact au terminal radio mobile TB.

Le terminal radio mobile TB comprend une interface radio IRB, un processeur PTB, une interface homme-machine IHMB, des mémoires MTB et un lecteur de carte LT. Les différents éléments du terminal sont reliés entre eux par un bus bidirectionnel BT.

Les mémoires MTB comportent entre autres une unité d'exploitation UEB.

La carte à puce ARB est une carte à puce MMC (Multi-Media Card), ou SD (Secure Digital) ou USB (Universal Serial Bus) ou UICC (Universal Integrated Circuit(s) Card). La carte à puce UICC est par exemple une carte munie d'une application SIM (Subscriber Identity Module) lorsque le terminal TB accueillant la carte est un mobile relié à un réseau du type GSM/GPRS (Global System for Mobile communications / General Packet Radio Service), ou d'une application USIM (Universal Subscriber Identity Module), RUIM (Removable User Identity Module) ou ISIM (IP Subscriber Identity Module) ou EAP-SIM (Extensible Authentication Protocol), lorsque le terminal TB accueillant la carte est un mobile fonctionnant en accès multiple à répartition par codes CDMA de la troisième génération (3GPP) du type UMTS ou UTRAN, ou de la troisième génération (3GPP2) du type CDMA 2000.

La carte à puce ARB comprend principalement un processeur PC, ou plusieurs processeurs, des blocs mémoires M1 à M3, un répertoire de données RDB et un répertoire d'exploitation REB. La carte échange des ordres ou requêtes, et des réponses avec le terminal TB à travers un port d'entrée/sortie PES et le lecteur LT avec ou sans contact.

Les répertoires RDB et REB sont identiques aux répertoires RDA et REA de l'agent ARA de l'ordinateur TA.

La mémoire M1 comprend une mémoire de type ROM ou Flash qui inclut le système d'exploitation de la carte.

La mémoire M2 est une mémoire non volatile par exemple EEPROM ou Flash pour notamment mémoriser des clés, des numéros d'identité et d'autres paramètres du profil de l'usager possédant la carte, comme un code PIN et autres données de sécurité. La mémoire M2 joue un rôle similaire à la mémoire commune MCA de l'agent de répertoire ARA selon la figure 2 et mémorise ainsi l'adresse d'accès ADSC du serveur de correspondance SC et l'adresse d'accès ADRB de la carte ARB.

Le gestionnaire de données GDB et le gestionnaire d'exploitation GEB de la carte ARB sont répartis dans les mémoires M1 et M2 et sont similaires aux gestionnaires GDA et GEA de l'agent de répertoire ARA dans l'ordinateur TA.

La mémoire M3 est une mémoire RAM ou SRAM servant plus particulièrement au traitement de données.

Le processeur PC, la mémoire M1, le gestionnaire de données GDB, les mémoires M2 et M3, le répertoire de données RDB et le port PES dans la carte sont reliés entre eux par un bus bidirectionnel BD. De même, le processeur PC, la mémoire M1, le gestionnaire d'exploitation GEB, les mémoires M2 et M3, le répertoire d'exploitation REB et le port PES dans la carte sont reliés entre eux par un bus bidirectionnel BE.

L'invention n'est pas limitée à un terminal radio mobile associé à une carte à puce. La carte à puce peut être également une carte incluse dans un ordinateur portable par exemple relié à un terminal mobile ou directement connecté au réseau internet, une carte de paiement, une carte de porte-monnaie électronique, une carte de santé, un passeport électronique, ou toute autre carte additionnelle associée à un terminal mobile.

Selon d'autres variantes, l'invention s'applique à d'autres objets communicants, tels qu'un assistant numérique personnel communicant PDA, ou un terminal domestique portable ou non comme une console de jeux vidéo ou un récepteur de télévision intelligent coopérant avec une télécommande à afficheur ou un clavier alphanumérique servant également de souris à travers une liaison infrarouge.

En référence à la **figure 4** et relativement aux objets communicants TA et TB des figures 1 à 3, l'étape d'enregistrement de données personnelles du procédé pour contrôler un partage de données personnelles comprend des étapes E1 à E7.

A l'étape E1, l'usager UA saisit au moyen de l'interface homme-machine IHMA de l'ordinateur TA des données personnelles DA₁ à DA_{N} le caractérisant, et établit des profils personnels à partir de ces données personnelles saisies. L'usager peut également saisir pour chaque donnée personnelle et/ou chaque profil personnel des règles d'utilisation de la donnée et/ou du profil. La règle d'utilisation d'une donnée incluse dans deux profils différents peut varier d'un profil à l'autre.

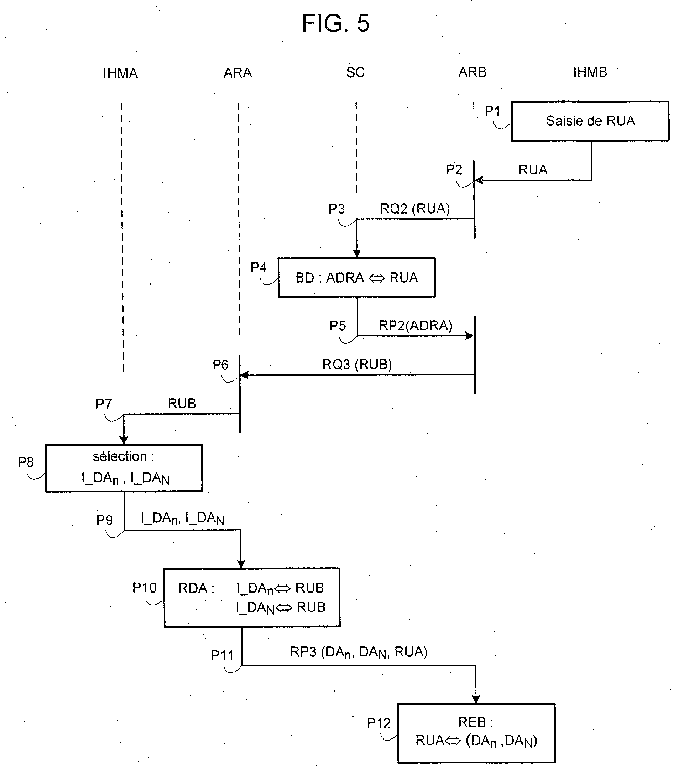

Les règles d'utilisation peuvent également être saisies lors de l'étape principale de partage de données personnelles avec un autre usager décrite en référence à la figure 5.

A l'étape E2, les données personnelles DA₁ à DA_{N}, les profils personnels et les règles d'utilisation associées aux données et profils sont fournies par l'interface IHMA au gestionnaire de données GDA pour être enregistrés dans le répertoire de données RDA. Les données DA₁ à DA_{N} accompagnées de leurs règles d'utilisation sont enregistrées dans le répertoire RDA, à l'étape E3, en association à des identificateurs I_DA₁ à I_DA_{N}. De même les profils accompagnés de leurs règles d'utilisation sont enregistrés dans le répertoire RDA en association à des identificateurs de profil.

A l'étape E4, le gestionnaire de données GDA établit une requête d'enregistrement RQ1 incluant l'adresse d'accès ADRA de l'agent répertoire ARA et la transmet au serveur de correspondance SC dont l'adresse d'accès ADSC est lue dans la mémoire commune MCA de l'agent de répertoire ARA.

A l'étape E5, l'interface de communication ICS du serveur de correspondance SC reçoit la requête RQ1 qui est traitée par le gestionnaire de correspondance GC du serveur SC. Le gestionnaire GC génère une référence anonyme RUA caractérisant l'usager UA et apparie la référence RUA générée à l'adresse d'accès ADRA reçue, l'appariement étant mémorisé dans la base de données BD du serveur. A l'étape E6, la référence d'usager RUA est transmise via une réponse RP1 à l'agent de répertoire ARA de l'ordinateur TA.

A l'étape E7, l'interface de communication ICA de l'ordinateur TA reçoit la réponse RP1 et la transmet au gestionnaire de données GDA qui la traite. Le gestionnaire de données enregistre la référence RUA reçue dans la mémoire commune MCA de l'agent de répertoire ARA.

L'usager UB du terminal radio mobile TB enregistre selon des mêmes étapes E1 à E7 ses données personnelles DB₁ à DB_{K}, ses profils et les règles d'utilisation associées, et reçoit du serveur de correspondance SC une référence anonyme RUB appariée dans la base BD à l'adresse d'accès ADRB de la carte à puce ARB.

En référence à la **figure 5** et relativement aux objets communicants TA et TB des figures 1 à 3, l'étape de partage de données personnelles DAₙ et DA_{N} de l'usager UA avec l'usager UB comprend des étapes P1 à P12.

L'usager UB souhaite obtenir des données personnelles de l'usager UA.

Initialement l'usager UB connaît la référence anonyme RUA de l'usager UA qu'il lui a été transmise par exemple par l'usager UA lui-même, ou par un serveur de gestion de données confidentielles anonymes. Pour chaque usager qui en a fait la demande, le serveur de gestion enregistre des données confidentielles codées de l'usager en association à la référence anonyme de l'usager. Les données confidentielles, dites ici données personnelles, ont été codées dans l'objet communicant de l'usager et transmises au serveur de gestion. Lorsque l'usager UB souhaite obtenir la référence anonyme de l'usager UA, il transmet au serveur de gestion une requête contenant une donnée de recherche codée caractérisant l'usager UA. Le serveur de gestion recherche la référence RUA de l'usager UA parmi des données personnelles codées enregistrées associées à d'autres références d'usagers dans le serveur en fonction de la donnée de recherche codée transmise, et transmet au terminal TB au moins la référence RUA associée à la donnée personnelle codée identique à la donnée de recherche codée. Ainsi l'usager UB obtient la référence anonyme RUA de l'usager UA sans connaître les données personnelles de l'usager UA.

A l'étape P1, l'usager UB saisit et/ou valide au moyen de l'interface homme-machine IHMB la référence RUA de l'usager UA. La référence RUA est transmise au gestionnaire d'exploitation GEB de l'agent de répertoire ARB du terminal TB, à l'étape P2.

A l'étape P3, le gestionnaire d'exploitation GEB établit une requête RQ2 contenant la référence RUA. La requête RQ2 est transmise au moyen de l'interface radio IRB du terminal TB au serveur de correspondance SC dont l'adresse ADSC est lue dans la mémoire commune M2 de l'agent de répertoire ARB.

A l'étape P4, l'interface de communication ICS du serveur SC reçoit la requête et la fournit au gestionnaire de correspondance GC qui la traite. Le gestionnaire GC trouve dans la base de données BD l'adresse d'accès ADRA correspondant à la référence RUA extraite de la requête reçue. A l'étape P5, le gestionnaire de correspondance GC établit une réponse RP2 contenant l'adresse d'accès ADRA que le serveur SC transmet au moyen de l'interface de communication ICS au gestionnaire d'exploitation GEB de l'agent de répertoire ARB du terminal TB.

A la réception de la réponse RP2, à l'étape P6, le gestionnaire d'exploitation GEB établit une requête RQ3 contenant la référence RUB de l'usager UB et requiert une communication avec l'agent de répertoire ARA de l'ordinateur TA dont il connaît l'adresse d'accès ADRA afin de lui transmettre la requête RQ3.

Optionnellement, l'agent ARB du terminal TB et l'agent ARA de l'ordinateur TA s'authentifient mutuellement avant d'échanger des requêtes et des réponses.

A l'étape P7, le gestionnaire de données GEA de l'agent de répertoire ARA réceptionne la requête RQ3 et commande l'interface IHMA pour notifier à l'usager UA qu'au moins l'une de ses données personnelles est demandée par un usager ayant la référence RUB extraite de la requête RQ3.

A l'étape P8, l'usager UA décide de partager des données personnelles DAₙ et DA_{N} avec l'usager UB en sélectionnant les identificateurs I_DAₙ et I_DA_{N} desdites données personnelles. L'usager UA peut également sélectionner des règles d'utilisation à associer aux données DAₙ et DA_{N} selon l'usager UB qui va les exploiter.

Les identificateurs de données et les règles d'utilisation associées sont transmis par l'interface IHMA au gestionnaire GDA, à l'étape P9.

A l'étape P10, le gestionnaire GDA associe les identificateurs I_DAₙ et I_DA_{N} à la référence RUB extraite de la requête RQ3, et mémorise les identificateurs I_DAₙ et I_DA_{N} et la référence RUB associés dans le répertoire de données RDA. Le gestionnaire GDA récupère dans le répertoire RDA les données personnelles partagées DAₙ et DA_{N} et les inclut avec leurs règles d'utilisation associées et la référence anonyme RUA de l'usager UA dans une réponse RP3. Puis le gestionnaire GDA transmet au moyen de l'interface IRA la réponse RP3 au gestionnaire d'exploitation GEB du terminal TB, à l'étape P11.

Optionnellement, les données DAₙ et DA_{N} sont transmises chiffrées dans la réponse RP3 pour être déchiffrées par le gestionnaire d'exploitation GEB du terminal TB avant d'être traitées.

A l'étape P12, le gestionnaire d'exploitation GEB extrait de la réponse RP3 et enregistre dans le répertoire d'exploitation REB les données DAₙ et DA_{N} et leurs règles d'utilisation en association avec la référence RUA de l'usager UA, et rompt la communication avec l'agent ARA.

Optionnellement, le gestionnaire d'exploitation GEB indique à l'usager UB par une notification que le répertoire REB comprend des données personnelles de l'usager UA.

De même, optionnellement, les identificateurs I_DA_{N} et I_DA_{N} sont inclus dans la réponse RP3 et sont enregistrées conjointement avec lès données DAₙ et DA_{N} dans le répertoire REB du terminal TB.

En variante, l'étape P10 associant des identificateurs I_DAₙ et I_DA_{N} à la référence RUB extraite de la requête RQ3 dans le répertoire de données RDA intervient après réception d'une confirmation de l'enregistrement des données DAₙ et DA_{N} dans le répertoire REB par le terminal TB.

Selon un autre exemple de réalisation, à l'étape P8 l'usager UA peut sélectionner un identificateur de profil personnel, par exemple le profil "amis", dont les données incluses dans le profil sont transmises au gestionnaire d'exploitation GEB du terminal TB et sont enregistrées dans le répertoire d'exploitation REB en association avec la référence RUA. Optionnellement, l'identificateur de profil est transmis avec les données au gestionnaire d'exploitation pour enregistrer dans le répertoire d'exploitation les données dans un groupe de contact dont l'identificateur du groupe correspond à l'identificateur du profil. L'identificateur du profil est enregistré dans le répertoire de données RDA en association avec la référence RUB de l'usager UB.

En variante, à l'étape P6, la requête RQ3 spécifie les données souhaitées par l'usager UB par exemple dans un message textuel rédigé par l'usager UB au moyen de l'interface IHMB et inclus dans la requête. Le message indiquant les données souhaitées est ensuite affiché au moyen de l'interface IHMA de l'ordinateur de l'usager UA pour que celui-ci en prenne connaissance.

En variante, les étapes P1 à P7 sont supprimées lorsque l'usager UB demande oralement à l'usager UA des données personnelles et lui donne sa référence RUB. Dans cette variante, le gestionnaire de données GDA envoie une requête au serveur de correspondance SC afin d'obtenir l'adresse ADRB de l'agent de répertoire ADRB du terminal TB en fonction de la référence donnée RUB. Puis, le gestionnaire de données GDA requiert une communication avec l'agent ARB ayant l'adresse d'accès ADRB afin de transmettre au gestionnaire d'exploitation GEB de l'agent ARB les données DAₙ et DA_{N} sélectionnées par l'usager UA.

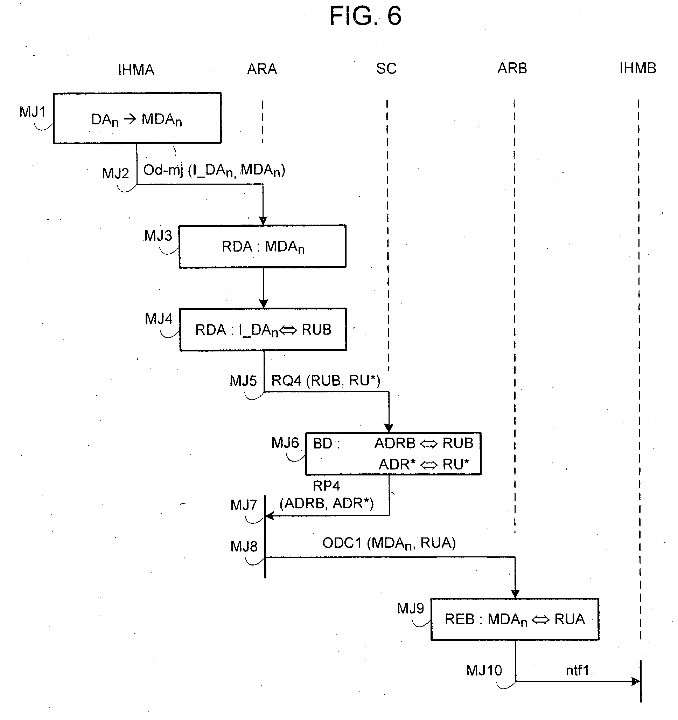

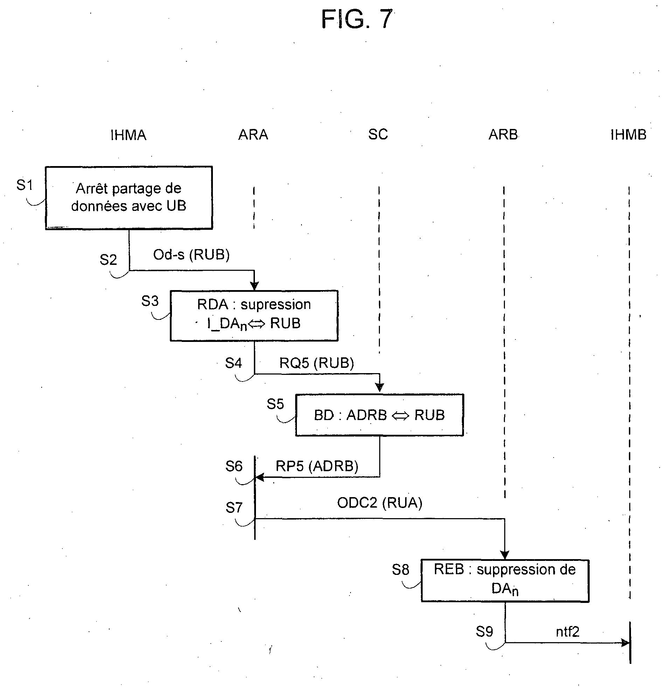

En référence aux **figures 6** **et** **7****,** et relativement aux objets communicants TA et TB des figures 1 à 3, l'agent de répertoire ARA de l'ordinateur TA contrôle les données DAₙ et DA_{N} dans l'agent de répertoire ARB du terminal TB, c'est-à-dire une mise à jour de données personnelles de l'usager UA et une suppression des données personnelles de l'usager dans le terminal TB de l'usager UB.

En référence à la **figure 6****,** une étape de mise à jour d'une donnée personnelle DAₙ de l'usager UA comprend des étapes MJ1 à MJ10.

A l'étape MJ1, l'usager UA modifie la donnée DAₙ en une donnée modifiée MDAₙ au moyen de l'interface IHMA qui fournit un ordre de mise à jour Od-mj au gestionnaire de données GDA, à l'étape MJ2. L'ordre de mise à jour Od-mj contient la donnée modifiée MDAₙ et l'identificateur I_DAₙ associés. A l'étape MJ3, le gestionnaire GDA trouve la donnée DAn dans le répertoire de données RDA en fonction de l'identificateur associé I_DAₙ et enregistre la données modifiée MDAₙ par écrasement de l'ancienne donnée DAₙ.

A l'étape MJ4, le gestionnaire GDA recherche dans le répertoire de données RDA une ou plusieurs références RU* d'usagers d'autres objets électroniques associées à l'identificateur I_DAₙ des données DAₙ et MDAₙ, et trouve notamment la référence RUB de l'usager UB parmi les références RU*. A l'étape MJ5, le gestionnaire de données établit une requête RQ4 contenant toutes les références RU* trouvées y compris la référence RUB et transmet la requête RQ4 au serveur de correspondance SC ayant l'adresse d'accès ADSC lue dans la mémoire commune MCA de l'agent de répertoire ARA, via l'interface de communication ICA.

A l'étape MJ6, l'interface de communication ICS du serveur de correspondance SC reçoit la requête RQ4 et la fournit au gestionnaire de correspondance GC qui la traite. Le gestionnaire GC trouve dans la base de données BD les adresses d'accès ADR* correspondant respectivement aux références RU* extraites de la requête reçue, y compris l'adresse d'accès ADRB correspondant à la référence RUB de l'usager UB. A l'étape MJ7, le gestionnaire de correspondance GC établit une réponse RP4 contenant lesdites adresses d'accès ADR*, y compris l'adresse ADRB, que le serveur SC transmet au moyen de l'interface de communication ICS au gestionnaire de données GDA de l'agent de répertoire ARA de l'ordinateur TA.

L'interface de communication ICA de l'ordinateur TA reçoit la réponse RP4 et la fournit au gestionnaire de données GDA qui requiert successivement une communication avec chacun des agents de répertoire des objets communicants en dépendance des adresses d'accès ADR* qui sont extraites de la réponse RP4. Ainsi à l'étape MJ8, le gestionnaire de données GDA établit un ordre de contrôle de mise à jour ODC1 contenant la donnée modifiée MDAₙ et la référence RUA de l'usager UA et optionnellement l'identificateur I_DAₙ associé à la donnée MDAₙ, et requiert une communication avec l'agent de répertoire ARB du terminal TB pour lui transmettre l'ordre de contrôle ODC1.

Optionnellement, l'agent ARA de l'ordinateur TA et l'agent ARB du terminal TB s'authentifient mutuellement avant d'échanger ou de traiter l'ordre de contrôle. De même, la donnée modifiée MDAₙ peut être transmise chiffrée dans l'ordre de contrôle pour être déchiffrée par le gestionnaire d'exploitation GEB du terminal TB avant d'être traitée.

A l'étape MJ9, l'interface radio IRB du terminal TB reçoit l'ordre de contrôle ODC1 qu'elle fournit au gestionnaire d'exploitation GEB de l'agent ARB. Le gestionnaire GEB rompt la communication avec l'agent ARB, trouve la donnée initiale associée à la référence RUA de l'usager UA extraite de l'ordre de contrôle ODC1 et la remplace par la donnée modifiée MDAₙ extraite de l'ordre de contrôle ODC1.

Optionnellement à l'étape MJ10, le gestionnaire d'exploitation GEB de l'agent de répertoire ARB indique la mise à jour de l'ancienne donnée DAₙ à l'usager UB par une notification ntf1 au moyen de l'interface homme-machine IHMB du terminal.

Optionnellement, après la mise à jour de la donnée modifiée DAₙ dans le répertoire RBE, le terminal TB transmet une confirmation de cette mise à jour à l'ordinateur TA.

En référence à la **figure 7****,** une étape de suppression des données personnelles de l'usager UA dans le terminal TB comprend des étapes S1 à S9.

A l'étape S1, l'usager UA décide de ne plus partager ses données personnelles avec l'usager UB et valide une suppression desdites données personnelles au moyen de l'interface IHMA qui fournit un ordre de suppression Od-s contenant la référence RUB de l'usager UB au gestionnaire de données GDA, à l'étape S2.

A l'étape S3, à la réception de l'ordre de suppression Od-s, le gestionnaire de données GDA supprime dans le répertoire de données RDA toutes les associations d'identificateurs de données personnelles ou de profil personnel avec la référence RUB de l'usager UB.

A l'étape S4, le gestionnaire de données GDA établit une requête RQ5 contenant la référence RUB et la transmet au serveur de correspondance SC ayant l'adresse d'accès ADSC lue dans la mémoire commune MCA de l'agent de répertoire ARA, via l'interface de communication ICA.

A l'étape S5, l'interface de communication ICS du serveur de correspondance SC reçoit la requête RQ5 et la fournit au gestionnaire de correspondance GC qui la traite. Le gestionnaire GC trouve dans la base de données BD l'adresse d'accès ADRB correspondant à la référence RUB extraite de la requête reçue RQ5. A l'étape S6, le gestionnaire de correspondance GC établit une réponse RP5 contenant l'adresse d'accès ADRB trouvée qu'il transmet au moyen de l'interface de communication ICS au gestionnaire de données GDA de l'agent de répertoire ARA de l'ordinateur TA.

L'interface de communication ICA de l'ordinateur TA reçoit la réponse RP5 et la fournit au gestionnaire de données GDA. A l'étape S7, le gestionnaire GDA établit un ordre de contrôle de suppression ODC2 relatif à une suppression de donnée et contenant la référence RUA de l'usager UA et requiert une communication avec l'agent de répertoire du terminal TB en dépendance de l'adresse d'accès ADRB pour lui transmettre l'ordre de contrôle ODC2.

Optionnellement, l'agent ARA de l'ordinateur TA et l'agent ARB du terminal TB s'authentifient mutuellement avant d'échanger ou de traiter l'ordre de contrôle.

A l'étape S8, l'interface radio IRB du terminal TB reçoit l'ordre de contrôle ODC2 qu'elle fournit au gestionnaire d'exploitation GEB de l'agent ARB. Le gestionnaire GEB supprime dans le répertoire d'exploitation REB toutes les données personnelles associées à la référence RUA extraite de l'ordre de contrôle ODC2.

A l'étape S9, le gestionnaire d'exploitation GEB de l'agent de répertoire ARB indique la suppression de données personnelles DAₙ ou MDAₙ de l'usager UA dans le terminal TB à l'usager UB par une notification ntf2.

En variante, l'étape S3 de suppression de toutes les associations d'identificateurs de données personnelles ou de profil personnel avec la référence RUB de l'usager UB dans le répertoire RDA a lieu après la réception d'une confirmation de la suppression des données personnelles de l'usager UA dans le répertoire REB par le terminal TB.

Selon une autre variante, l'usager UA souhaite supprimer une partie de ses données personnelles partagées avec l'usager UB dans le terminal TB. Ainsi à l'étape S1, l'usager UA sélectionne les données personnelles qu'il souhaite supprimer au moyen de l'interface IHMA qui fournit au gestionnaire de données GDA l'ordre de suppression Od-s contenant lesdites données personnelles sélectionnées. De même à l'étape S6, le gestionnaire GDA transmet un ordre de suppression ODC2 au gestionnaire d'exploitation GEB du terminal TB, l'ordre de contrôle ODC2 contenant la référence RUA de l'usager UA, et les données personnelles sélectionnées ou leurs identificateurs associés, afin de supprimer dans le répertoire d'exploitation REB les données personnelles sélectionnées qui sont trouvées en fonction de la référence RUA et des données personnelles ou de leurs identificateurs extraits de l'ordre de contrôle ODC2. A l'étape S10, le gestionnaire de données GDA supprime dans le répertoire de données RDA les associations reliant la référence RUB de l'usager UB et les identifïcateurs des données personnelles qui avaient été sélectionnées par l'usager UA à l'étape S1.

L'invention décrite ici concerne un procédé de partage de données personnelles. Selon une implémentation, les étapes du procédé de l'invention sont déterminées par les instructions d'un programme d'ordinateur incorporé dans des objets communicants TA, TB communiquant entre eux à travers un réseau de télécommunications RR-RPQ. Le programme comporte des instructions de programme qui, lorsque ledit programme est exécuté dans un processeur d'un objet communicant, réalisent les étapes du procédé selon l'invention.

En conséquence, l'invention s'applique également à un programme d'ordinateur, notamment un programme d'ordinateur enregistré sur ou dans un support d'informations lisible par un ordinateur et tout dispositif de traitements de données, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter le procédé selon l'invention.

## Revendications

1. Procédé pour contrôler un partage de données personnelles (DAₙ) d'un premier usager (UA) d'un premier objet communicant (TA) avec un deuxième usager (UB) d'un deuxième objet communicant (TB), **caractérisé en ce qu'**il comprend les étapes suivantes de :
partager (P8) dans le premier objet communicant en réponse à une requête du deuxième usager, des données personnelles du premier usager enregistrées dans le premier objet communicant parmi d'autres données personnelles du premier usager,
associer (P10) dans le premier objet communicant les données personnelles partagées avec une référence (RUB) du deuxième usager, et
transmettre (P11) les données personnelles partagées au deuxième objet communicant et les enregistrer (P12) dans le deuxième objet communicant en association avec une référence (RUA) du premier usager.

2. Procédé conforme à la revendication 1, comprenant après l'étape de partager, une étape pour contrôler depuis le premier objet communicant les données personnelles partagées du premier usager en transmettant (MJ8, S6) un ordre de contrôle (ODC1, ODC2) contenant au moins la référence du premier usager au deuxième objet communicant afin de trouver dans le deuxième objet communicant les données personnelles du premier usager en association à la référence extraite de l'ordre de contrôle et les traiter (MJ9, S7) en fonction de l'ordre de contrôle transmis.

3. Procédé conforme à la revendication 2, selon lequel l'étape de contrôler comprend :
dans le premier objet communicant (TA), une mise à jour (MJ1-MJ3) d'au moins une donnée personnelle (DAₙ) du premier usager (UA) en une donnée personnelle modifiée (MDAₙ), une recherche (MJ4) de la référence (RUB) du deuxième usager (UB) associée à la donnée personnelle et une transmission (MJ8) de l'ordre de contrôle (ODC1) contenant la donnée personnelle modifiée et la référence du premier usager au deuxième objet communicant (TB), et
une mise à jour (MJ9) de la donnée personnelle associée à la référence du premier usager extraite de l'ordre de contrôle dans le deuxième objet communicant en fonction de la donnée personnelle modifiée extraite de l'ordre de contrôle.

4. Procédé conforme à la revendication 2 ou 3, selon lequel l'étape de contrôler comprend une transmission (S6) de l'ordre de contrôle (ODC2) contenant la référence (RUA) du premier usager (UA) depuis le premier objet communicant (TA) au deuxième objet communicant (TB), une suppression (S7) d'au moins une donnée personnelle (DAₙ) associée à la référence du premier usager extraite de l'ordre de contrôle dans le deuxième objet communicant (TB), et une suppression (S10) d'une association entre ladite donnée personnelle et la référence (RUB) du deuxième usager (UB) dans le premier objet communicant.

5. Procédé conforme à l'une quelconque des revendications 1 à 4, selon lequel l'étape de contrôler comprend en outre une transmission (MJ5, S3) de la référence (RUB) du deuxième usager (UB) depuis le premier objet communicant (TA) à un moyen serveur (SC), et une transmission (MJ7, S5) d'une adresse d'accès (ADRB) correspondant à la référence transmise du deuxième usager depuis le moyen serveur au premier objet communicant (TA) afin que le premier objet communicant (TA) transmette (MJ8, S6) en dépendance de l'adresse d'accès (ADRB) l'ordre de contrôle (ODC1, ODC2) au deuxième objet communicant (TB).

6. Procédé conforme à l'une quelconque des revendications 1 à 5, comprenant initialement un enregistrement (E1-E3) de données personnelles du premier usager (UA) dans le premier objet communicant (TA), une transmission (E4) d'une adresse d'accès (ADRA) du premier objet communicant depuis ledit premier objet communicant à un moyen serveur (SC), une génération (E5) de la référence (RUA) du premier usager par le moyen serveur; et un appariement (E5) de la référence à l'adresse d'accès transmise dans le moyen serveur.

7. Procédé conforme à l'une quelconque des revendications 1 à 6, selon lequel des règles d'utilisation établies par le premier usager (UA) sont transmises (P11) avec les données personnelles partagées depuis le premier objet communicant (TA) au deuxième objet communicant (TB).

8. Objet communicant (TA) d'un premier usager (UA) communiquant avec un deuxième objet communicant (TB) d'un deuxième usager (UB) pour contrôler un partage de données personnelles (DAₙ) du premier usager avec le deuxième usager, **caractérisé en ce qu'**il comprend :
un moyen (GDA) pour partager en réponse à une requête du deuxième usager des données personnelles du premier usager enregistrées dans le premier objet communicant parmi d'autres données personnelles de l'usager,
un moyen (GDA) pour associer les données personnelles partagées avec une référence (RUB) du deuxième usager,
un moyen (ICA) pour transmettre les données personnelles partagées au deuxième objet communicant afin d'enregistrer les données personnelles transmises dans le deuxième objet communicant en association avec une référence (RUA) du premier usager, et
un moyen (GDA) pour contrôler les données personnelles partagées du premier usager en transmettant un ordre de contrôle (ODC1, ODC2) contenant au moins la référence du premier usager au deuxième objet communicant afin de trouver dans le deuxième objet communicant les données personnelles du premier usager en association à la référence extraite de l'ordre de contrôle et les traiter en fonction de l'ordre de contrôle transmis.

9. Objet communicant (TB) communiquant avec un premier objet communicant (TA) d'un premier usager
(UA) contrôlant un partage de données personnelles (DAₙ) avec un deuxième usager (UA) utilisant ledit objet communicant, **caractérisé en ce qu'**il comprend :
un moyen (GEB) pour requérir des données personnelles du premier usager enregistrées dans le premier objet communicant parmi d'autres données personnelles du premier usager, les données personnelles partagées enregistrées dans le premier objet communicant étant associées à une référence (RUB) du deuxième usager,
un moyen (GDB-REB) pour enregistrer les données personnelles partagées transmises en association avec une référence (RUA) du premier usager, et
un moyen (GEB) pour traiter les données personnelles partagées associées à la référence du premier usager extraite d'un ordre de contrôle (ODC1, ODC2) transmis depuis le premier objet communicant, en fonction de l'ordre de contrôle.

10. Programme d'ordinateur apte à être mis en oeuvre dans un premier objet communicant (TA) communiquant avec un deuxième objet communicant (TB) d'un deuxième usager (UB) pour contrôler un partage de données personnelles (DAₙ) du premier usager avec le deuxième usager(, ledit programme étant **caractérisé en ce qu'**il comprend des instructions qui, lorsque le programme est exécuté dans ledit premier objet communicant, réalisent les étapes suivantes :
partager (P8) en réponse à une requête du deuxième usager des données personnelles du premier usager enregistrées dans le premier objet communicant parmi d'autres données personnelles du premier usager,
associer (P10) les données personnelles partagées avec une référence (RUB) du deuxième usager,
transmettre (P11) les données personnelles partagées au deuxième objet communicant afin d'enregistrer les données personnelles transmises dans le deuxième objet communicant en association avec une référence (RUA) du premier usager, et
contrôler les données personnelles partagées du premier usager en transmettant (MJ8, S6) un ordre de contrôle (ODC1, ODC2) contenant au moins la référence du premier usager au deuxième objet communicant afin de trouver dans le deuxième objet communicant les données personnelles du premier usager en association à la référence extraite de l'ordre de contrôle et les traiter (MJ9, S7) en fonction de l'ordre de contrôle transmis.

11. Programme d'ordinateur apte à être mis en oeuvre dans un objet communicant (TB) communiquant avec un premier objet communicant (TA) d'un premier usager (UA) contrôlant un partage de données personnelles (DAₙ) avec un deuxième usager (UA) utilisant ledit objet communicant, ledit programme étant **caractérisé en ce qu'**il comprend des instructions qui, lorsque le programme est exécuté dans ledit objet communicant, réalisent les étapes suivantes :
requérir (P6) des données personnelles du premier usager enregistrées dans le premier objet communicant parmi d'autres données personnelles du premier usager, les données personnelles partagées enregistrées dans le premier objet communicant étant associées à une référence (RUB) du deuxième usager,
enregistrer (P12) les données personnelles partagées transmises en association avec une référence (RUA) du premier usager, et
traiter (MJ9, S7) les données personnelles partagées associées à la référence du premier usager extraite d'un ordre de contrôle (ODC1, ODC2) transmis depuis le premier objet communicant, en fonction de l'ordre de contrôle transmis.

## Patentansprüche

1. Kontrollverfahren zum Teilen persönlicher Angaben (DAₙ) eines ersten Nutzers (UA) eines ersten kommunizierenden Objekts (TA) mit einem zweiten Nutzer (UB) eines zweiten kommunizierenden Objekts (TB), **dadurch gekennzeichnet, dass** es die folgenden Stufen umfasst:
In dem ersten kommunizierenden Objekt als Antwort auf eine Anfrage des zweiten Nutzers Teilen (P8) der im ersten kommunizierenden Objekt unter anderen persönlichen Angaben des ersten Nutzers abgespeicherten persönlichen Angaben des ersten Nutzers,
Zuordnen der mit einer Referenz (RUB) des zweiten Nutzers geteilten persönlichen Angaben in dem ersten kommunizierenden Objekt und
Übertragen (P11) der geteilten persönlichen Angaben auf das zweite kommunizierende Objekt und sie in dem zweiten kommunizierenden Objekt in Verbindung mit einer Referenz (RUA) des ersten Nutzers abspeichern (P12).

2. Verfahren gemäß Anspruch 1, nach der Teilungsstufe, umfassend eine Stufe zum Kontrollieren der geteilten persönlichen Angaben des ersten Nutzers vom ersten kommunizierenden Objekt aus durch Übertragen (MJ8, S6) eines Kontrollbefehls (ODC1, ODC2), der wenigstens die Referenz des ersten Nutzers des zweiten kommunizierenden Objekts enthält, um in dem zweiten kommunizierenden Objekt die persönlichen Angaben des ersten Nutzers in Verbindung mit der aus dem Kontrollbefehl extrahierten Referenz zu finden und sie in Abhängigkeit von dem übertragenen Kontrollbefehl zu verarbeiten (MJ9, S7).

3. Verfahren gemäß Anspruch 2, gemäß dem die Kontrollstufe umfasst:
In dem ersten kommunizierenden Objekt (TA) eine Aktualisierung (MJ1-MJ3) von wenigstens einer persönlichen Angabe (DAₙ) des ersten Nutzers (UA) in eine geänderte persönliche Angabe (MDAₙ), eine Suche (MJ4) der der persönlichen Angabe zugeordneten Referenz (RUB) des zweiten Nutzers (UB) und eine Übertragung (MJ8) des die geänderte persönliche Angabe enthaltenden Kontrollbefehls (ODC1) und die Referenz des ersten Nutzers auf das zweite kommunizierende Objekt (TB) und
eine Aktualisierung (MJ9) der persönlichen Angabe, die der aus dem Kontrollbefehl extrahierten Referenz des ersten Nutzers zugeordnet ist in dem zweiten kommunizierenden Objekt in Abhängigkeit von der aus dem Kontrollbefehl extrahierten geänderten persönlichen Angabe.

4. Verfahren gemäß Anspruch 2 oder 3, gemäß dem die Kontrollstufe eine Übertragung (S6) des die Referenz (RUA) des ersten Nutzers (UA) enthaltenden Kontrollbefehls (ODC2) von dem ersten kommunizierenden Objekt (TA) auf das zweite kommunizierende Objekt (TB), ein Löschen (S7) von wenigstens einer der Referenz des ersten Nutzers zugeordneten persönlichen Angabe (DAₙ) aus dem Kontrollbefehl in dem zweiten kommunizierenden Objekt (TB) und ein Löschen (S10) einer Zuordnung zwischen der genannten persönlichen Angabe und der Referenz (RUB) des zweiten Nutzers (UB) in dem ersten kommunizierenden Objekt umfasst.

5. Verfahren gemäß Anspruch 1 bis 4, gemäß dem die Kontrollstufe darüber hinaus eine Übertragung (MJ5, S3) der Referenz (RUB) des zweiten Nutzers (UB) von dem ersten kommunizierenden Objekt (TA) auf ein Servermittel (SC) und eine Übertragung (MJ7, S5) einer Zugangsadresse (ADRB), die der vom zweiten Nutzer vom Servermittel auf das erste kommunizierende Objekt (TA) übertragenen Referenz entspricht, umfasst, damit das erste kommunizierende Objekt (TA) in Abhängigkeit von der Zugangsadresse (ADRB) den Kontrollbefehl (ODC1, OC2) auf das zweite kommunizierende Objekt (TB) überträgt (MJ8, S6).

6. Verfahren gemäß Anspruch 1 bis 5, zu Beginn umfassend eine Speicherung (E1-E3) von persönlichen Angaben des ersten Nutzers (UA) in dem ersten kommunizierenden Objekt (TA), eine Übertragung (E4) einer Zugangsadresse (ADRA) des ersten kommunizierenden Objekts von dem genannten ersten kommunizierenden Objekt aus auf ein Servermittel (SC), eine Generierung (E5) der Referenz (RUA) des ersten Nutzers durch das Servermittel; und eine Kopplung (E5) der Referenz mit der in das Servermittel übertragenen Zugangsadresse.

7. Verfahren gemäß Anspruch 1 bis 6, nach dem von dem ersten Nutzer (UA) festgelegte Nutzungsregeln mit den vom ersten kommunizierenden Objekt (TA) auf das zweite kommunizierende Objekt (TB) geteilten persönlichen Angaben übertragen werden (P11).

8. Kommunizierendes Objekt (TA) eines ersten Nutzers (UA), das mit einem zweiten kommunizierenden Objekt (TB) eines zweiten Nutzers (UB) kommuniziert, um ein Teilen von persönlichen Angaben (DAₙ) des ersten Nutzers mit dem zweiten Nutzers zu kontrollieren, **dadurch gekennzeichnet, dass** es umfasst:
Als Antwort auf eine Anfrage des zweiten Nutzers ein Mittel (GDA) zum Teilen der im ersten kommunizierenden Objekt unter anderen persönlichen Daten des Nutzers abgespeicherten persönlichen Angaben des ersten Nutzers,
ein Mittel (GDA) zum Zuordnen der mit einer Referenz (RUB) des zweiten Nutzers geteilten persönlichen Angaben,
ein Mittel (ICA) zum Übertragen der geteilten persönlichen Angaben auf das zweite kommunizierende Objekt, um die übertragenen persönlichen Angaben in dem zweiten kommunizierenden Objekt in Verbindung mit einer Referenz (RUA) des ersten Nutzers abzuspeichern und
ein Mittel (GDA) zur Kontrolle der geteilten persönlichen Angaben des ersten Nutzers durch Übertragen eines wenigstens die Referenz des ersten Nutzers enthaltenden Kontrollbefehls (ODC1, ODC2) auf das zweite kommunizierende Objekt, um in dem zweiten kommunizirenden Objekt die persönlichen Angaben des ersten Nutzers in Verbindung mit der aus dem Kontrollbefehl extrahierten Referenz zu finden und sie in Abhängigkeit mit dem übertragenen Kontrollbefehl zu verarbeiten.

9. Kommunizierendes Objekt (TB), das mit einem ersten kommunizierenden Objekt (TA) eines ersten Nutzers (UA) kommuniziert, der ein Teilen von persönlichen Angaben (DAₙ) mit einem zweiten Nutzer (UA) kontrolliert, der das genannte kommunizierende Objekt nutzt, **dadurch gekennzeichnet, dass** es umfasst:
ein Mittel (GEB) zum Anfordern der persönlichen Angaben des ersten Nutzers, die in dem ersten kommunizierenden Objekt unter anderen persönlichen Angaben des ersten Nutzers abgespeichert sind, wobei die geteilten, im ersten kommunizierenden Objekt gespeicherten persönlichen Angaben einer Referenz (RUB) des zweiten Nutzers zugeordnet sind,
ein Mittel (GDB-REB) zum Abspeichern der übertragenen geteilten persönlichen Angaben in Verbindung mit einer Referenz (RUA) des ersten Nutzers und
ein Mittel (GEB) zum Verarbeiten in Abhängigkeit von dem Kontrollbefehl der der aus einem von dem ersten kommunizierenden Objekt übertragenen Kontrollbefehl (ODC1, ODC2) extrahierten Referenz des ersten Nutzers zugeordneten geteilten persönlichen Angaben.

10. Computerprogramm, das geeignet ist, in einem ersten kommunizierenden Objekt (TA) umgesetzt zu werden, das mit einem zweiten kommunizierenden Objekt (TB) eines zweiten Nutzers (UB) kommuniziert, um ein Teilen von persönlichen Angaben (DAₙ) des ersten Nutzes mit dem zweiten Nutzes zu kontrollieren, wobei das genannte Programm **dadurch gekennzeichnet ist, dass** es Anweisungen umfasst, die, wenn das Programm in dem genannten ersten kommunizierenden Objekt ausgeführt ist, die folgenden Stufen ausführen:
Als Antwort auf eine Anfrage des zweiten Nutzers Teilen (P8) der persönlichen Daten des ersten Nutzers, die in dem ersten kommunizierenden Objekt unter anderen persönlichen Angaben des ersten Nutzers abgespeichert sind,
Zuordnen (P10) der mit einer Referenz (RUB) des zweiten Nutzers geteilten persönlichen Angaben
Übertragen (P11) der geteilten persönlichen Angaben auf das zweite kommunizierende Objekt, um die übertragenen persönlichen Daten in Verbindung mit einer Referenz (RUA) des ersten Nutzers in dem zweiten kommunizierenden Objekt abzuspeichern, und
Kontrolle der geteilten persönlichen Daten des ersten Nutzers durch Übertragen (MJ8, S6) eines wenigstens die Referenz des ersten Nutzers enthaltenden Kontrollbefehls (ODC1, ODC2) auf das zweite kommunizierende Objekt, um in dem zweiten kommunizierenden Objekt die persönlichen Angaben des ersten Nutzers in Verbindung mit der aus dem Kontrollbefehl extrahierten Referenz zu finden und sie in Abhängigkeit von dem übertragenen Kontrollbefehl zu verarbeiten (MJ9, S7).

11. Computerprogramm, das geeignet ist, in einem kommunizierenden Objekt (TB) umgesetzt zu werden, das mit meinem ersten kommunizierenden Objekt (TA) eines ersten Nutzers (UA) kommuniziert, der ein Teilen persönlicher Angaben (DAn) mit einem zweiten Nutzer (UA) kontrolliert, der das genannte kommunizierende Objekt nutzt, wobei das genannte Programm **dadurch gekennzeichnet ist, dass** es Anweisungen umfasst, die, wenn das Programm in dem genannten kommunizierenden Objekt ausgeführt wird, die folgenden Stufen realisieren:
Anfordern (P6) der persönlichen Angaben des ersten Nutzers, die in dem ersten kommunizierenden Objekt unter anderen persönlichen Angaben des ersten Nutzers abgespeichert sind, wobei die in dem ersten kommunizierenden Objekt gespeicherten geteilten persönlichen Angaben einer Referenz (RUB) des zweiten Nutzers zugeordnet sind,
Abspeichern (P12) der übertragenen geteilten persönlichen Angaben in Verbindung mit einer Referenz (RUA) des ersten Nutzers und
In Abhängigkeit von dem übertragenen Kontrollbefehl Verarbeiten (MJ9, S7) der geteilten persönlichen Angaben, die der aus einem vom dem ersten kommunizierenden Objekt übertragenen Kontrollbefehl (ODC1, ODC2) extrahierten Referenz des ersten Nutzers zugeordnet sind.

## Claims

1. A method for controlling a sharing of personal data (DAₙ) of a first user (UA) of a first communicating object (TA) with a second user (UB) of a second communicating object (TB), **characterized in that** it comprises the following steps:
sharing (P8), in the first communicating object in response to a request from the second user, the first user's personal data saved in the first communicating object among other personal data of the first user,
associating (P10), in the first communicating object, the shared personal data with a reference (RUB) of the second user, and
transmitting (P11) the shared personal data to the second communicating object and saving (P12) said data in the second communicating object in association with a reference (RUA) of the first user.

2. A method according to claim 1, comprising, after the step of sharing, a step of controlling, from the first communicating object, the shared personal data of the first user by transmitting (MJ8, S6) a control statement (ODC1, ODC2) containing at least the reference of the first user to the second communicating object in order to find, in the second communicating object, the personal data of the first user in association with the reference retrieved from the control statement and processing said data (MJ9, S7) according to the control statement transmitted.

3. A method according to claim 2, wherein the step of controlling comprises:
in the first communicating object (TA), updating (MJ1-MJ3) at least one piece of data (DAₙ) of the first user (AU) into a modified piece of personal data (MDAₙ), searching (MJ4) for the reference (RUB) of the second user (UB) associated with the piece of personal data and transmitting (MJ8) the control statement (ODC1) containing the modified piece of personal data and the reference of the first user to the second communicating object (TB), and
updating (MJ9) the piece of personal data associated with the reference of the first user retrieved from the control statement in the second communicating object according to the modified piece of personal data retrieved from the control statement.

4. A method according to claim 2 or 3, wherein the step of controlling comprises: transmitting (S6) the control statement (ODC2) containing the reference (RUA) of the first user (UA) from the first communicating object (TA) to the second communicating object (TB), deleting (S7) at least one piece of personal data (DAₙ) associated with the reference of the first user retrieved from the control statement in the second communicating object (TB), and deleting (S10) an association between said piece of personal data and the reference (RUB) of the second user (UB) in the first communicating object.

5. A method according to any one of claims 1 to 4, wherein the step of controlling further comprises:
transmitting (MJ5, S3) the reference (RUB) of the second user (UB) from the first communicating object (TA) to a server means (SC), and transmitting (MJ7, S5) an access address (ADRB) corresponding to the transmitted reference of the second user from the server means to the first communicating object (TA) so that the first communicating object (TA) can transmit (MJ8, S6), depending on the access address (ADRB), the control statement (ODC1, ODC2) to the second communicating object (TB).

6. A method according to any one of claims 1 to 5, initially comprising: saving (E1-E3) the personal data of the first user (UA) in the first communicating object (TA), transmitting (E4) an access address (ADRA) of the first communicating object from said first communicating object to a server means (SC), generating (E5) the reference (RUA) of the first user by the server means, and matching (E5) the reference with the access address transmitted in the server means.

7. A method according to any one of claims 1 to 6, wherein said usage rules established by the first user (UA) are transmitted (P11) with the shared personal data from the first communicating object (TA) to the second communicating object (TB).

8. A communicating object (TA) of a first user (AU) communicating with a second communicating object (TB) of a second user (UB) for controlling the sharing of personal data (DAₙ) of the first user with the second user, **characterized in that** it comprises:
means (GDA) for sharing, in response to a request from the second user, personal data of the first user saved in the first communicating object among other personal data of the user,
means (GDA) for associating the shared personal data with a reference (RUB) of the second user, means
means (ICA) for transmitting the shared personal data to the second communicating object in order to save the personal data transmitted in the second communicating object in association with a reference (RUA) of the first user, and
means (GDA) for controlling the shared personal data of the first user by transmitting a control statement (ODC1, ODC2) containing at least the reference of the first user to the second communicating object in order to find, in the second communicating object, the personal data of the first user in association with the reference retrieved from the control statement and processing said data according to the transmitted control statement.

9. A communicating object (TB) communicating with a first communicating object (TA) of a first user (UA) controlling the sharing of personal data (DAₙ) with a second user (UA) using said communicating object, **characterized in that** it comprises:
means (GEB) for requesting personal data of the first user saved in the first communicating object among other personal data of the first user, with the shared personal data saved in the first communicating object being associated with a reference (RUB) of the second user,
means (GDB-REB) for saving the shared personal data transmitted in association with a reference (RUA) of the first user, and
means (GEB) for processing the shared personal data associated with the reference of the first user retrieved from a control statement (ODC1, ODC2) transmitted from the first communicating object, according to the control statement.

10. A computer program adapted to be implemented in a first communicating object (TA) communicating with a second communicating object (TB) of a second user (UB) for controlling a sharing of personal data (DAₙ) of the first user with the second user (UB), with said program being **characterized in that** it comprises instructions which, when the program is executed in said first communicating object, perform the following steps of:
sharing (P8), in response to a request from the second user, personal data of the first user saved in the first communicating object among other personal data of the first user,
associating (P10) the shared personal data with a reference (RUB) of the second user,
transmitting (P11) the shared personal data to the second communicating object in order to save the personal data transmitted in the second communicating object in association with a reference (RUA) of the first user, and
controlling the shared personal data of the first user (MJ8, S6) by transmitting a control statement (ODC1, ODC2) containing at least the reference of the first user to the second communicating object in order to find in the second communicating object the personal data of the first user in association with the reference retrieved from the control statement and processing (MJ9, S7) said data according to the control statement transmitted.

11. A computer program adapted to be implemented in a communicating object (TB) communicating with a first communicating object (TA) of a first user (UA) controlling the sharing of personal data (DAₙ) with a second user (UA) using said communicating object, with said program being **characterized in that** it comprises instructions which, when the program is executed in said communicating object, perform the following steps of:
requesting (P6) personal data of the first user saved in the first communicating object among other personal data of the first user, with the shared personal data saved in the first communicating object being associated with a reference (RUB) of the second user,
saving (P12) the shared personal data transmitted in association with a reference (RUA) of the first user, and
processing (MJ9, S7) the shared personal data associated with the reference of the first user retrieved from a control statement (ODC1, ODC2) transmitted from the first communicating object, depending on the control statement transmitted.
